# FASCICULE DE BREVET EUROPEEN

(11) **EP 0 474 562 B1**
(45) Date de publication et mention de la délivrance du brevet: **06.03.1996**
(21) Numéro de dépôt: 91402383.3
(22) Date de dépôt: 05.09.1991
(51) Int. Cl.: F16C 35/06, G01P 3/44, G01D 5/14, G01D 5/16

(54) **Manchon de roulement à codeur pour dispositif capteur**
Rotierende Kodierhülse für Abtastvorrichtung
Rotating coding sleeve for sensor device

(30) Priorité: 07.09.1990 US 578404
(43) Date de publication de la demande: 11.03.1992
(73) Titulaire: SNR ROULEMENTS, F-74000 Annecy (FR)
(72) Inventeur: Brauer, Michael C., F-75116 Paris (FR)
(74) Mandataire: Ballot, Paul Denis Jacques

(56) Documents cités:
- EP-A- 0 190 639
- EP-A- 0 378 939
- BE-A- 353 492
- DE-A- 3 732 958
- US-A- 3 957 319

## Description

La présente invention se rapporte d'une façon générale aux roulements à capteurs et plus particulièrement à un roulement à capteur où le codeur est fixé en rotation sur le manchon de roulement.

Des centrales électroniques (ECU) collectent des informations provenant de capteurs et commandent l'action de nombreuses fonctions vitales dans les automobiles. Les domaines principaux dans lesquels les ECU ont fait leurs percées concernent le moteur, la transmission, la suspension et les freins antiblocage.

Dans tous ces cas, les données définissant le mouvement de rotation ou un changement de position sont fournies à l'ECU, qui élabore une réponse calculée ou cartographiée idéale pour les conditions de fonctionnement. L'ECU initie ensuite des changements dans la fonction contrôlée de façon à réduire au minimum l'écart par rapport à la condition idéale. Une grande fiabilité, une bonne résolution et des coûts économiques sont souhaitables dans la technologie des roulements à capteurs.

La fixation et le positionnement du codeur sont très importants dans la réalisation de systèmes de détection pour des mesures de position angulaire, de vitesse et d'accélération.

Dans'l'art antérieur, le codeur a été disposé dans de nombreuses positions par rapport à un arbre tournant dont la vitesse doit être mesurée par le capteur. Dans une réalisation, le codeur est fixé sur la bague tournante du roulement. Dans d'autres réalisations, on a relié le codeur à l'arbre tournant soit directement soit par l'intermédiaire d'un organe intercalaire séparé. Un tel agencement est enseigné par le document DE-A-2505 802 cité à titre d'exemple.

Bien que les emplacements indiqués ci-dessus conviennent pour certaines applications, il existe des situations où des critères de réalisation et l'encombrement limitent une utilisation du codeur dans ces emplacements. Dans de tels cas, il est souhaitable d'installer le codeur dans des positions différentes.

C'est le cas par exemple lorsque l'on souhaite mesurer des paramètres de rotation d'un arbre dont le roulement est du type à contact angulaire tel que décrit dans le document BE-A 353 492.

On a défini ci-dessus les limitations connues concernant les roulements à capteurs existants. Il apparaît par conséquent qu'il serait avantageux de proposer une solution permettant de remédier à une ou plusieurs des limitations définies ci-dessus. Un exemple de réalisation approprié sera décrit de façon plus complète ci-après.

Selon un aspect de la présente invention, il est proposé un dispositif pour capter des paramètres de rotation d'un arbre par rapport à un élément, le dispositif comprenant un dispositif pour mesurer des paramètres de rotation d'un arbre par rapport à un élément fixe, comprenant :
- un roulement du type à contact angulaire comportant une bague intérieure ayant un alésage correspondant qui est espacé circonférentiellement de l'arbre de manière à réaliser un espace annulaire angulaire entre ledit alésage et l'arbre;
- un manchon de roulement correspondant qui est disposé à l'intérieur dudit espace annulaire angulaire et qui est fixé en rotation par rapport à l'arbre;
- un moyen de fixation pour limiter le déplacement du manchon de roulement par rapport au roulement ;
- un moyen de poussée qui est interposé entre le manchon de roulement et le moyen de fixation pour pousser le manchon de roulement en contact avec le roulement ;
- caractérisé en ce qu'il comprend :
- un codeur annulaire qui est fixé en rotation sur une partie externe du manchon de roulement, et
- un capteur qui est placé à proximité du codeur annulaire et qui est fixe par rapport à l'élément fixe.

Cet aspect et d'autres ressortiront de la description détaillée de l'invention qui va suivre, cette description étant faite en relation avec les dessins ci-joints :
- la figure 1 est une vue en coupe latérale illustrant une réalisation d'une combinaison d'un manchon de roulement et d'un codeur pour détecter une rotation entre un arbre tournant et un carter ;
- la figure 2 est une vue semblable à la figure 1, illustrant une autre réalisation d'un capteur, et
- la figure 3 est une vue semblable aux précédentes illustrant une réalisation d'une combinaison d'un manchon de roulement et d'un codeur pour capter une rotation relative entre un carter tournant et un arbre qui est dehors l'étendue de la protection déterminée par la teneur des revendications.

Dans cette description, les éléments identiques dans des réalisations différentes ont été désignés par des références identiques.

Un dispositif qui mesure des paramètres de rotation (telle qu'une position angulaire, une vitesse et une accélération) est désigné dans son ensemble par la référence 10. Le dispositif comprend un arbre 12 qui tourne par rapport à un élément fixe 14. L'élément fixe 14 peut constituer une pièce d'un véhicule, une pièce d'une machine ou une partie du sol. La présente invention s'est avérée particulièrement applicable à des parties d'un véhicule où des limitations d'encombrement nécessitent de rechercher en premier lieu un endroit où un capteur peut être disposé.

L'arbre 12 est supporté par des roulements 16. Dans de nombreuses applications où le montage nécessite la mise en place de roulements 16 sur l'arbre, il est nécessaire d'avoir un jeu ou espace 19 entre l'alésage 18 d'une bague intérieure 20 et le diamètre extérieur 22 de l'arbre.

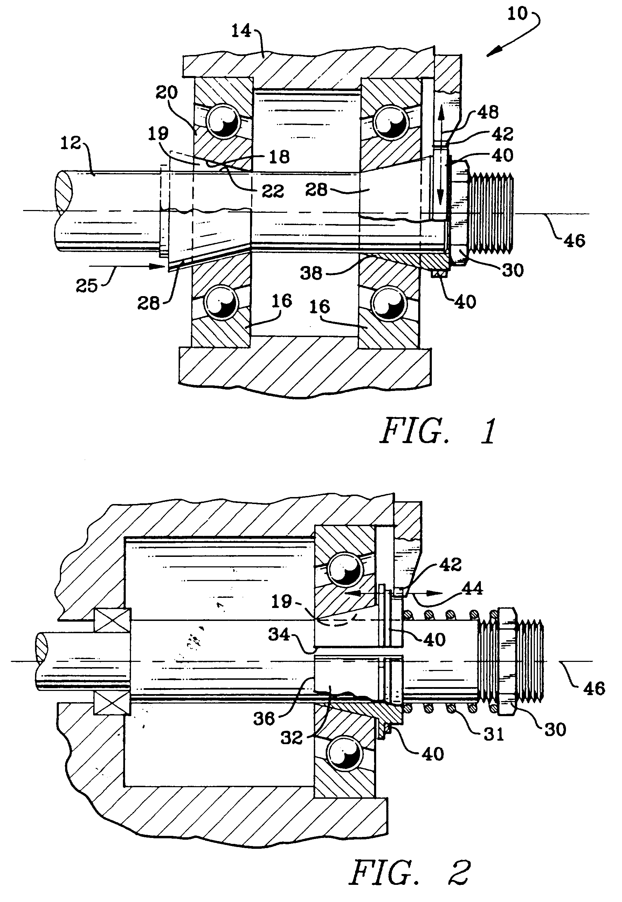

Pour absorber une partie de ce jeu 19, un manchon de roulement 28 est enfoncé (tel qu'illustré par la flèche 25), dans l'espace 19. Cette configuration est particulièrement souhaitable lorsque les roulements 16 sont du type à contact angulaire (tel qu'illustré sur la figure 1), où la force d'enfoncement est utilisée pour précharger les roulements. Le roulement à contact angulaire peut être à rouleaux, à billes ou tout autre type connu de roulement pouvant supporter à la fois un effort axial et un effort radial.

Pour précharger un roulement à contact angulaire, un manchon de roulement 28 est appliqué contre un ou plusieurs roulements (tel qu'illustré respectivement sur la figure 2 et la figure 1). Le manchon de roulement tournera uniformément avec la bague intérieure 20 et l'arbre 12 comme un élément unique. En conséquence, la rotation du manchon de roulement 28 fournira une indication précise de la rotation de l'arbre 12.

La précharge précitée est exercée par un dispositif de fixation 30, tel qu'un écrou, qui est vissé sur l'arbre 12 (figure 1). un dispositif élastique 31 est utilisé en coopération avec le dispositif de fixation (figure 2) de façon que les roulements sont sujets à de petits déplacements relatifs de leurs éléments sans altération de l'effort de précharge.

Il existe au moins deux configurations du manchon de roulement 28 qui peuvent être utilisées dans la présente invention. La première configuration, connue comme étant le manchon de roulement fendu 32, est illustrée sur la figure 2. Un manchon de roulement fendu comporte une fente 34 qui permet une expansion et une contraction radiale du manchon. De cette manière, une première extrémité axiale 36 du manchon 32 peut être comprimée pour s'adapter à l'espace 19.

L'autre configuration de manchon de roulement, appelée le manchon de roulement en porte-à-faux 28 (illustrée sur la figure 1), comporte une extrémité qui est flexible pour permettre une déformation d'adaptation à l'espace 19 quand le manchon de roulement 28 est emmanché au contact du roulement 16.

Un codeur 40 est fixé sur le manchon de roulement 28 pour former ensemble un élément unique tournant. De cette manière, la rotation du manchon de roulement fournira une indication précise de la rotation de l'arbre 12. Le codeur peut être réalisé sous forme d'un élément unique avec le manchon de roulement ou bien il peut être fixé sur le manchon de roulement en utilisant des adhésifs ou des dispositifs de fixation connus, compatibles avec les propriétés mécaniques du codeur.

Un capteur 42 est placé à proximité immédiate du codeur. On peut utiliser dans cette application tout type bien connu de capteur mais il s'est avéré particulièrement approprié d'employer des capteurs à effet Hall et des capteurs magnétorésistifs.

La position dans laquelle le capteur 42 est placé dépend dans une large mesure de la configuration du codeur 40. La figure 2 montre une configuration axiale de capteur où la direction 44 dans laquelle le capteur 42 capte les paramètres de rotation de l'arbre est sensiblement parallèle à l'axe de rotation 46 de l'arbre 12.

A titre de comparaison, la figure 1 représente une configuration radiale de capteur où la direction 48 dans laquelle le capteur 42 détecte les paramètres de rotation de l'arbre est sensiblement perpendiculaire à l'axe de rotation 46 de l'axe 12.

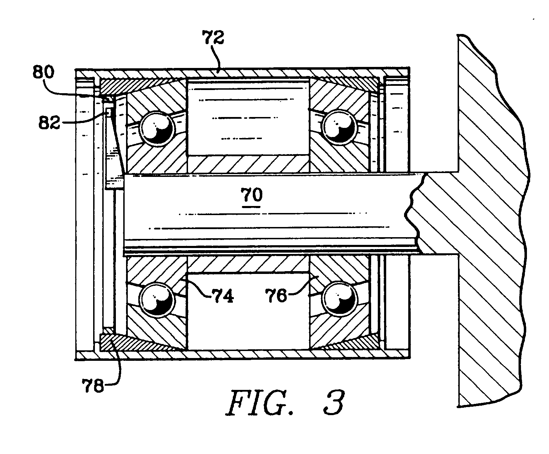

La figure 3 représente un corps immobile 70 autour duquel tourne un élément rotatif 72. L'élément rotatif 72 est supporté par plusieurs roulements 74, 76. Un manchon de roulement bloque efficacement un des roulements 74, 76. Sur le manchon de roulement est fixé un codeur annulaire 80 qui tourne avec lui, comme décrit précédemment. Le codeur fournit ainsi une indication précise de la rotation de l'élément tournant 72. Un capteur 82, qui est fixé sur le corps immobile 70, mesure des paramètres de rotation de l'élément tournant 72 par rapport au corps 70.

## Revendications

1. Un dispositif, comprenant :
- un roulement (16) du type à contact angulaire comportant une bague intérieure (20) ayant un alésage (18) correspondant qui est espacé circonférentiellement de l'arbre de manière à réaliser un espace annulaire angulaire (19) entre ledit alésage (18) et l'arbre (12) ;
- un manchon de roulement (28) correspondant qui est disposé à l'intérieur dudit espace annulaire angulaire (19) et qui est fixé en rotation par rapport à l'arbre ;
- un moyen de fixation (30) pour limiter le déplacement du manchon de roulement (28) par rapport au roulement (16)
- un moyen de poussée (31) qui est interposé entre le manchon de roulement (28) et le moyen de fixation (30) pour pousser le manchon de roulement en contact avec le roulement ;
- caractérisé en ce qu'il comprend pour mesurer des paramètres de rotation d'un arbre (12) par rapport à un élément fixe (14) :
- un codeur annulaire (40) qui est fixé en rotation sur une partie externe du manchon de roulement (28), et
- un capteur (42) qui est placé à proximité du codeur annulaire (40) et qui est fixe par rapport à l'élément fixe (14).

2. Dispositif selon la revendication 1, caractérisé en ce que le manchon de roulement (28) est en porte-à-faux.

3. Dispositif selon la revendication 1, caractérisé en ce que le manchon de roulement (28) est réalisé à l'aide d'une bague fendue (34).

4. Dispositif selon l'une des revendications précédentes 1 à 3, caractérisé en ce que la direction dans laquelle le capteur détecte les paramètres de rotation de l'arbre est parallèle à l'axe de rotation (46) de l'arbre.

5. Dispositif selon l'une des revendications précédentes 1 à 3, caractérisé en ce que la direction (48) dans laquelle le capteur détecte les paramètres de rotation de l'arbre est perpendiculaire à l'axe de rotation (46) de l'arbre.

6. Dispositif selon l'une des revendications précédentes 1 à 5, caractérisé en ce que le capteur (42) est un capteur à effet Hall.

7. Dispositif selon l'une des revendications précédentes 1 à 5, caractérisé en ce que le capteur (42) est un capteur magnétorésistif.

8. Dispositif selon l'une des revendications précédentes 1 à 7, caractérisé en ce que l'élément fixe (14) est un châssis de véhicule.

## Patentansprüche

1. Vorrichtung, mit:
- einem Lager (16) mit Rundkontakt, welches einen Innenring (20) mit einer entsprechenden Bohrung (18) aufweist, die einen derartigen Umfangsabstand von der Welle aufweist, daß ein ringförmiger unter einem Winkel angeordneter Raum (19) zwischen der Bohrung (18) und der Welle (12) besteht;
- einer angepaßten Lagermuffe (28), welche im Inneren dieses ringförmigen unter einem Winkel angeordneten Raumes (19) angeordnet ist und die drehfest mit der Welle verbunden ist;
- einer Befestigungsanordnung (30) zur Begrenzung der Verschiebung der Lagermuffe (28) bezüglich des Lagers (16);
- einer Druckanordnung (31), die zwischen der Lagermuffe (28) und der Befestigungsanordnung (30) eingesetzt ist, um die Lagermuffe bis zur Berührung mit dem Lager zu beaufschlagen;
- dadurch gekennzeichnet, daß sie zur Messung der Drehparameter der Welle (12) bezüglich eines feststehenden Bauteils (14) aufweist:
- einen ringförmigen Codierer (40), der drehfest mit einem äußeren Abschnitt der Lagermuffe (28) verbunden ist und
- einen Fühler (42), der in der Nähe des ringförmigen Codierers (40) angeordnet ist und der bezüglich des feststehenden Bauteils (14) feststeht.

2. Vorrichtung nach Anspruch 1, dadurch gekennzeichnet, daß die Lagermuffe (28) fliegend gelagert ist.

3. Vorrichtung nach Anspruch 1, dadurch gekennzeichnet, daß die Lagermuffe (28) durch einen geschlitzten Ring (34) gebildet wird.

4. Vorrichtung nach einem der vorhergehenden Ansprüche 1 bis 3, dadurch gekennzeichnet, daß die Richtung, in welcher der Fühler die Drehparameter der Welle mißt, parallel zur Drehachse (46) der Welle verläuft.

5. Vorrichtung nach einem der vorhergehenden Ansprüche 1 bis 3, dadurch gekennzeichnet, daß die Richtung (48), in der der Fühler die Drehparameter der Welle mißt, senkrecht zur Drehachse (46) der Welle verläuft.

6. Vorrichtung nach einem der vorhergehenden Ansprüche 1 bis 5, dadurch gekennzeichnet, daß der Fühler (42) ein Hall-Effektfühler ist.

7. Vorrichtung nach einem der vorhergehenden Ansprüche 1 bis 5, dadurch gekennzeichnet, daß der Fühler (42) ein magnetoresistiver Fühler ist.

8. Vorrichtung nach einem der vorhergehenden Ansprüche 1 bis 7, dadurch gekennzeichnet, daß das feststehende Bauteil (14) ein Fahrzeugchassis ist.

## Claims

1. Device comprising :
- a bearing (16) of the angular contact type having an inner ring (20) with a corresponding bore (18) which is spaced circumferentially apart from the shaft in such a way that an angular annular space (19) is formed between the said bore (18) and the shaft (12) ;
- a corresponding bearing sleeve (28) which is arranged on the interior of the said angular annular space (19) and which is integral with the shaft in rotation;
- a fixing means (30) to restrict displacement of the bearing sleeve (28) relative to the bearing (16);
- a pushing means (31) which is inserted between the bearing sleeve (28) and the fixing means (30) to push the bearing sleeve into contact with the bearing;
- characterised in that, in order to measure the rotational parameters of a shaft (12) relative to a fixed element (14), it has :
- an annular encoder (40) which is joined to an external portion of the bearing sleeve (28) and integral therewith in rotation, and
- a sensor (42) which is located close to the annular encoder (40) and which is fixed relative to the fixed element (14).

2. Device as claimed in claim 1, characterised in that the bearing sleeve (28) has an overhanging portion.

3. Device as claimed in claim 1, characterised in that the bearing sleeve is formed by a split ring (34).

4. Device as claimed in one of the previous claims 1 to 3, characterised in that the direction in which the sensor detects the rotational parameters of the shaft is parallel to the axis of rotation (46) of the shaft.

5. Device as claimed in one of the previous claims 1 to 3, characterised in that the direction (48) in which the sensor detects the rotational parameters of the shaft is perpendicular to the axis of rotation (46) of the shaft.

6. Device as claimed in one of the previous claims 1 to 5, characterised in that the sensor (42) is a Hall effect sensor.

7. Device as claimed in one of the previous claims 1 to 5, characterised in that the sensor (42) is a magnetoresistive sensor.

8. Device as claimed in one of the previous claims 1 to 7, characterised in that the fixed element (14) is a vehicle chassis.
